# EUROPEAN PATENT SPECIFICATION

(11) **EP 2 819 501 B1**
(45) Date of publication and mention of the grant of the patent: **09.09.2020**
(21) Application number: 12870225.5
(22) Date of filing: 02.03.2012
(51) Int. Cl.: A01D 43/063

(54) **ELECTRIC DUMP BAGGING ATTACHMENT**
ELEKTRISCHES ZUBEHÖR ZUM EINSACKEN VON ABFALL
ACCESSOIRE D'ENSACHAGE À SYSTÈME ÉLECTRIQUE DE VIDAGE

(43) Date of publication of application: 07.01.2015
(73) Proprietor: HUSQVARNA AB, 561 82 Huskvarna (SE)
(72) Inventor: CANONGE, Eric, Charlotte, North Carolina 28269 (US)
(74) Representative: Schröer, Gernot H.
(86) International application number: PCT/US2012/027517
(87) International publication number: WO 2013/130103

(56) References cited:
- WO-A2-2013/130100
- US-A- 5 080 442
- US-A1- 2002 083 696
- US-A1- 2006 053 762
- US-B1- 6 595 737
- US-B2- 6 931 827
- US-B2- 6 931 827
- US-B2- 8 033 086
- US-B2- 8 033 086

## Description

### TECHNICAL FIELD

Example embodiments generally relate to vehicle attachments and, more particularly, relate to attachments for vehicles configured for performing lawn maintenance.

### BACKGROUND

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers. Walk-behind lawn mowers are typically compact, have comparatively small engines and are relatively inexpensive. Meanwhile, at the other end of the spectrum, riding lawn mowers, such as lawn tractors, can be quite large. Riding lawn mowers can sometimes also be configured with various functional accessories (e.g., trailers, tillers and/or the like) in addition to grass cutting components. Riding lawn mowers provide the convenience of a riding vehicle as well as a typically larger cutting deck as compared to a walk-behind model.

Some riding lawn mowers and lawn tractors may include attachments, such as bagging attachments that are configured to receive debris such as grass clippings or other yard waste in a container that can be detached or otherwise emptied. For a rear discharge riding lawn mower or lawn tractor, a specifically designed bagging attachment is typically designed for each model of riding lawn mower or lawn tractor in order to provide a good seal with the bagging attachment. If the bagging attachment does not mate well with the riding lawn mower or lawn tractor, the contents of the bagging attachment may escape.

The document US 2002/0083696 A1 discloses mowing mint machine having a vehicle body, a mower unit connected to and supported by the vehicle body and having flow generating members driven by power supply thereto for generating grass carrier air flows, a grass catcher disposed at a rear end of the vehicle body and defining an opening for receiving grass clippings, a grass transport duct for guiding grass clippings transported by the carrier air flows to the grass catcher, and a moving mechanism for moving the grass catcher between a collecting position for connecting the grass catcher to the grass transport duct and a discharge position for separating the grass catcher from the grass transport duct. The mowing machine has link mechanisms for moving the grass catcher that are provided as a pair of right and left mechanisms. Each of these mechanisms includes an upper link, a lower link and a vertical link into connecting rear ends of the upper link and lower link. Each link mechanism is connected to an upper portion of a support frame fixed to the rear of the vehicle body. Each link mechanism is vertically movable in parallel by an extension and contraction of a hydraulic cylinder mounted between a lower position of a support frame and the lower link. A guard rod is disposed behind and extends parallel to the hydraulic cylinder to be movable up and down with extension and contraction of the hydraulic cylinder.

In many situations, bagging attachments may be mounted to an assembly that may allow the bagging attachments to pivot during installation and/or operation for dumping activities. A pivot assembly provided for these purposes may wear over time and result in a loose fit, excessive vibration/noise, and/or inferior operation characteristics. Moreover, wearing of the pivot assembly could hinder automatic or powered operation of a bagging attachment dump assembly.

### BRIEF SUMMARY OF SOME EXAMPLES

According to the invention, a system comprising a bagging attachment support structure and a bagging attachment is provided. The bagging attachment support structure is provided for a bagging attachment configured to attach to a rear of a riding lawn care vehicle to receive debris discharged via a rear discharge of the riding lawn care vehicle. The bagging attachment support structure includes a powered dump and at least two support rods disposed to extend from a back plate of the riding lawn care vehicle. Each of the support rods terminates at a distal end thereof at a corresponding pivot socket defining a pivot point of a pivot assembly configured to engage a carriage assembly of the bagging attachment. The carriage assembly is operably coupled to a bag frame of the bagging attachment. The powered drive is operably coupled to one of the support rods and to the pivot assembly at a portion of the pivot assembly that is rearward of the bagging attachment support structure. The pivot point defines a point about which the bag frame is pivotable via operation of the powered drive to rotate the bag frame between a first position in which material is collectable in the bagging attachment via the rear discharge and a second position in which the bag frame is rotated to a dump position for emptying contents of the bagging attachment. The powered drive is configured to extend in a substantially vertical direction to deliver a force to the portion of the pivot assembly that is rearward of the bagging attachment support structure to cause the bag frame to rotate between the first position and the second position.

The carriage assembly comprises a first sleeve bracket and a second sleeve bracket that each extend over respective legs of the bag frame to slidably connect the carriage assembly to the bag frame.

Accordingly, in order to provide a mechanism by which to enable operators to dump a bagging attachment via a powered dump system that includes good wear characteristics and provides for fast and easy operation, some embodiments may provide a dump system with one or more features described herein to improve dump efficiency and/or performance. For example, some embodiments may provide a dump system that employs a low friction pivot assembly. Some embodiments may provide a dump system that employs a substantially vertically oriented moment arm that lifts a rear portion of the bagging attachment to cause the bagging attachment to rotate via the pivot assembly away from engagement with a back plate or rear portion of the lawn mower.

In one example embodiment, a riding lawn care vehicle is provided. The riding vehicle may include a rear discharge disposed at a rear of the riding lawn care vehicle, a bagging attachment configured to attach to the rear of the riding lawn care vehicle to receive debris discharged via the rear discharge and a bagging attachment support structure. The bagging attachment may include a carriage assembly to which a bag frame of the bagging attachment is operably coupled. The bagging attachment support structure may be configured to support the carriage assembly relative to the riding lawn care vehicle and may be operably coupled to a pivot assembly about which the bag frame is pivotable via a powered dump to rotate the bag frame between a first position in which material is collectable in the bagging attachment via the rear discharge, and a second position in which the bag frame is rotated to a dump position for emptying contents of the bagging attachment. The powered dump may be operably coupled to the bagging attachment support structure and the pivot assembly at a portion of the pivot assembly that is rearward of the bagging attachment support structure. The powered dump may be configured to extend in a substantially vertical direction to deliver a force to the portion of the bag frame that is rearward of the pivot assembly to cause the bag frame to rotate between the first position and the second position.

Some example embodiments may improve an operator's ability to effectively operate a powered dump system in a relatively easy manner, while obtaining efficient results that are repeatable over the lifetime of the system. The user experience associated with using attachments on a riding lawn care vehicle, and particularly the bagging attachment of the riding lawn care vehicle may therefore be improved.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1, which includes FIGS. 1A and 1B, illustrates views of a riding lawn care vehicle having a bagging attachment removed (FIG. 1A) and installed (FIG. 1B) according to respective different conditions of an example embodiment;
FIG. 2 illustrates an exploded perspective view of a carriage assembly relative to the bagging attachment of the riding lawn care vehicle of FIG. 1 according to an example embodiment;
FIG. 3 illustrates a perspective view of the carriage assembly isolated from other components according to an example embodiment;
FIG. 4 illustrates a perspective view of portions of the bagging attachment support structure according to an example embodiment;
FIG. 5 illustrates a side view of the bagging attachment support structure according to an example embodiment;
FIG. 6 is a side view of a powered drive useable in connection with the bagging attachment support structure according to an example embodiment;
FIG. 7 illustrates an exploded perspective view of a pivot assembly useable in connection with the bagging attachment support structure according to an example embodiment;
FIG. 8 is a side view of an adjustment plate for adjustable mounting of the powered drive relative to the bagging attachment support structure according to an example embodiment;
FIG. 9 illustrates a side view of the bagging attachment support structure and the bag frame to illustrate how the bag frame is supported by the bagging attachment support structure according to an example embodiment; and
FIG. 10, which includes FIGS. 10A and 10B, illustrates the bag frame being rotated between a first position and a second position using the powered drive according to an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may provide a bagging attachment that can be emptied via a powered dump process. However, providing a bagging attachment that can be emptied via a powered dump process may be accomplished via a number of different ways. For example, a power device (e.g., an electric actuator, hydraulic cylinder, and/or the like) may apply a force to a bagging attachment that rests on a pivot assembly. In some cases, the power device may apply a linear load to the bagging attachment at a point to the rear of the pivot and approximately horizontally rearward of the pivot. However, in such a case, the power device may supply its highest load when the load requirement is the lowest from the bagging attachment. As the bagging attachment opens, the moment created by the grass load increases as the opening angle increases until the grass dumps. Thus, the dump system supplies its highest load at the closed position and loses its mechanical advantage as the bag opens. As such, the power device must be larger in order to accommodate the fact that the load from the contents of the bagging attachment is greatest at a point when the mechanical advantage of the powered device is not at its peak. Accordingly, such a system may be considered to be costly and inefficient.

Another option may be to rely on a power device to pull a load across the pivot point in order to pull the bagging attachment open rather than push it open. Such a design may result in a geometry that is not ideal for efficiency. In this regard, the power device may not be able to supply its peak output along with a peak mechanical advantage at a point where the bagging attachment load is highest.

Some example embodiments may provide a powered dump system that employs a power device that is disposed rearward of the pivot point to apply a linear force in a substantially vertical direction to a rear portion of a pivot assembly. According to example embodiments, a more vertically oriented moment arm may be achieved to enable a maximum moment created by the power device to occur closer to the maximum moment caused by the grass load. In some cases, the power device may be smaller and less costly and may be placed relatively lower in the bagging attachment to facilitate provision of the more vertically oriented moment arm. Accordingly, a lower power actuator may achieve less costly, more efficient, and even potentially faster operation than alternative arrangements.

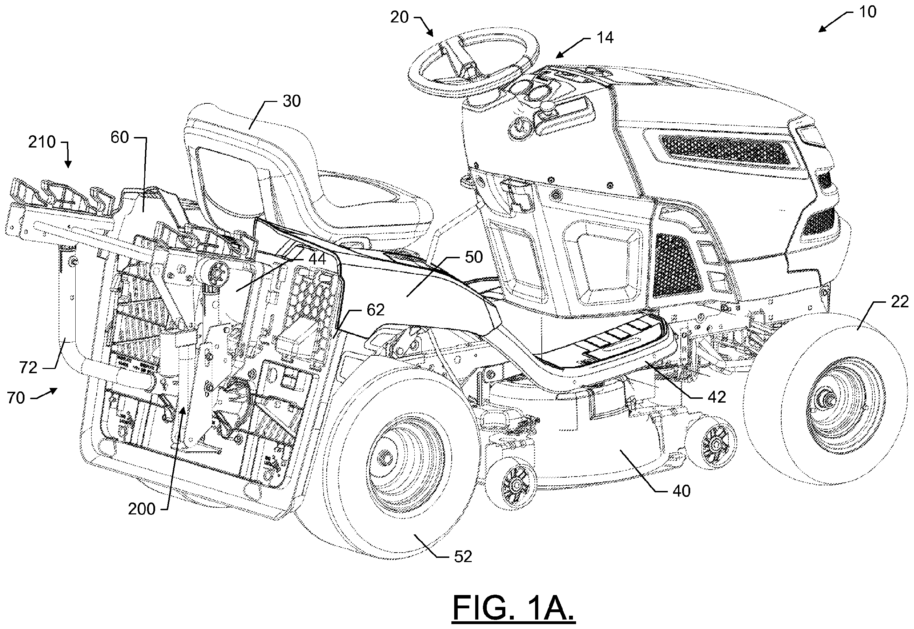

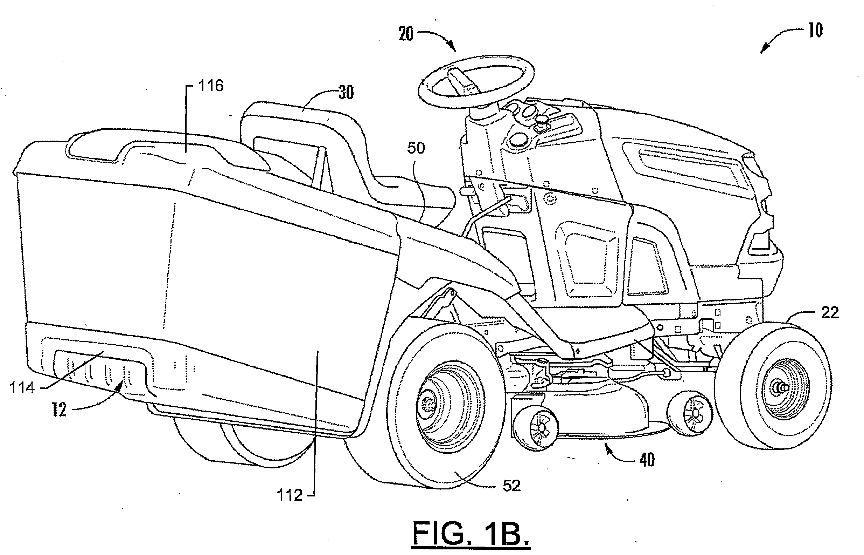

FIGS. 1A and 1B illustrate a perspective view of a riding lawn care vehicle 10 having a bagging attachment 12 removed (FIG. 1A) and installed (FIG. 1B) according to respective different conditions of an example embodiment. As shown and described herein, the riding lawn care vehicle 10 may be a riding lawn mower (e.g., a lawn tractor, front-mount riding lawn mower, a tight or zero-turn riding lawn mower, and/or the like) having a rear discharge. Thus, some example embodiments may apply to lawn care vehicles with rear discharge bagging attachments. In other embodiments of the invention, the adjustable bagging attachment may be used on other lawn care vehicles (e.g., walk-behind lawn mowers, robotic mowers, and/or the like) and other vehicles.

In some embodiments, the riding lawn care vehicle 10 may include an information panel 14 that may include gauges and/or controls related to operation of the riding lawn care vehicle 10. In an example embodiment, the riding lawn care vehicle 10 may include a steering assembly 20 (e.g., a steering wheel, handle bars, or the like) functionally connected to front (or rear) wheels 22 of the riding lawn care vehicle 10 to allow the operator to steer the riding lawn care vehicle 10. The operator may sit on a seat 30 positioned rearward of the steering assembly 20, as shown in FIG. 1. However, in other example embodiments, the seat 30 may be positioned in a middle or front portion of the riding lawn care vehicle 10. The riding lawn care vehicle 10 may also include a cutting deck 40 having at least one cutting blade mounted therein. The cutting deck 40 may be positioned behind the front wheels 22 (or forward of the front wheels 22 in some examples) in a position to enable the operator to cut grass using the cutting blade when the cutting blade is rotated below the cutting deck 40 when the cutting deck 40 is in a cutting position. In some embodiments, a footrest 42 (e.g., one on each side of the riding lawn care vehicle 10) may also be positioned above the cutting deck 40 to enable the operator to rest his or her feet thereon while seated in the seat 30. When operating to cut grass, the grass clippings may be expelled from the cutting deck 40 via a rear discharge 44. The rear discharge 44 may be positioned below the seat 30 and may expel the grass clippings out of a discharge path positioned in the center portion of the back of the riding lawn care vehicle 10 into the bagging attachment 12, when the bagging attachment 12 is attached to the riding lawn care vehicle 10. In some example embodiments, the rear discharge 44 may not necessarily be provided in the center portion of the back of the riding lawn care vehicle 10, but may be positioned off to one side (e.g., over the tire).

In the pictured example embodiment, the engine of the riding lawn care vehicle 10 is positioned in front of the operator. However, in other example embodiments, the engine could be in different positions such as below or behind the operator. As shown in FIG. 1, the riding lawn care vehicle 10 may include rear fenders 50 positioned proximate to rear wheels 52. The rear fenders 50 may form a portion of the body of the riding vehicle and the rear fenders 50 may include a rear surface that is shaped to connect to or otherwise mate with top portions of a back plate 60. The back plate 60 may include a seating surface 62 that extends substantially around an external perimeter of the back plate 60 and is shaped to fit in relatively close proximity or otherwise mate with the bagging attachment 12 to form a relatively tight fit or seal between the bagging attachment 12 and the back plate 60. The bagging attachment 12 may include a mating surface that is configured to fit in relatively close proximity or otherwise mate with the seating surface 62 of the back plate 60.

When the mating surface and the seating surface 62 are fit together in relatively close proximity, a good fit or seal may be provided between the back plate 60 and the bagging attachment 12 to prevent the escape of dust and/or debris from the bagging attachment 12. In some embodiments, there may not be any actual connective features on either the mating surface or the seating surface 62 to actively engage corresponding receptive features on the opposing surface. In other words, although there may be protrusions and/or corresponding recesses on opposing faces to improve sealing characteristics of the components, there may be no clamps, brackets, flanges, bolts, couplings, latches, and/or the like disposed on either the mating surface or the seating surface 62 to secure the surfaces to each other. Instead, the mating surface and the seating surface 62 may simply fit together in close proximity to each other when the bagging attachment 12 is affixed to the riding lawn care vehicle 10 appropriately, as described in greater detail below.

As shown in FIG. 1A, when the bagging attachment 12 is removed, the back plate 60 is exposed and forms a substantial portion of the back end of the riding lawn care vehicle 10. In this regard, the back plate 60 extends to substantially cover an entirety of the rear of the frame of the riding lawn care vehicle 10. In some examples, a bagging attachment support structure 70 extends through the back plate 60 out the rear of the riding lawn care vehicle 10. The bagging attachment support structure 70 of this example embodiment includes two support rods 72. The support rods 72 of this example are substantially L-shaped and connect to the frame of the riding lawn care vehicle 10 via openings in the back plate 60. The support rods 72 initially extend from the back of the riding lawn care vehicle 10 in a direction that is substantially parallel to a plane in which the bottom of the bagging attachment 12 lies when the bagging attachment 12 is attached to the riding lawn care vehicle 10. The support rods 72 may include a bend, forming the L-shape, that extends the support rods 72 away from the bottom of the bagging attachment 12. However, it should be appreciated that the support rods 72, and the shape provided herein is merely exemplary and other shapes could be used in alternative embodiments. Moreover, in some cases, rather than separate tubes, rods or members, a single tube, rod or member may be employed and brackets or other attachment mechanisms may be employed to support other components. The support rods 72 may facilitate the provision of an assembly for holding at least a portion of a carriage assembly 100 of the bagging attachment 12 and to support the weight of the bagging attachment 12 when the bagging attachment 12 is attached to the riding lawn care vehicle 10 and to provide a mechanism by which to attach the bagging attachment 12 to the bagging attachment support structure 70.

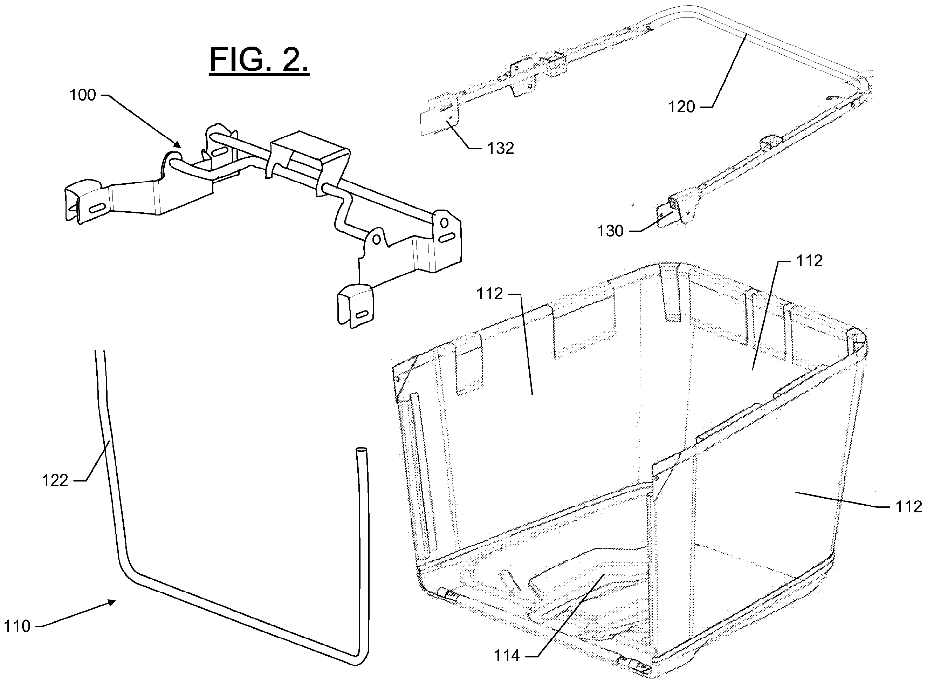

In an example embodiment, the bagging attachment 12 may be constructed such that it is assembled around the carriage assembly 100. In this regard, a bag frame 110 (see FIG. 2), bag sidewalls 112, a bag bottom 114, and bag top 116 of the bagging attachment 12 may all be supported (e.g., directly or indirectly) by the carriage assembly 100. In some cases, the carriage assembly 100 may be a weldment of components arranged to have an externally adjustable pivot point such that, by adjusting the pivot point, the fit between the mating surface and the seating surface 62 may be adjusted without requiring removal of the bagging attachment 12. In this regard, the carriage assembly 100 may allow for fore and aft adjustment of the pivot point of the bagging attachment 12 while the carriage assembly 100 is being supported by the bagging attachment support structure 70.

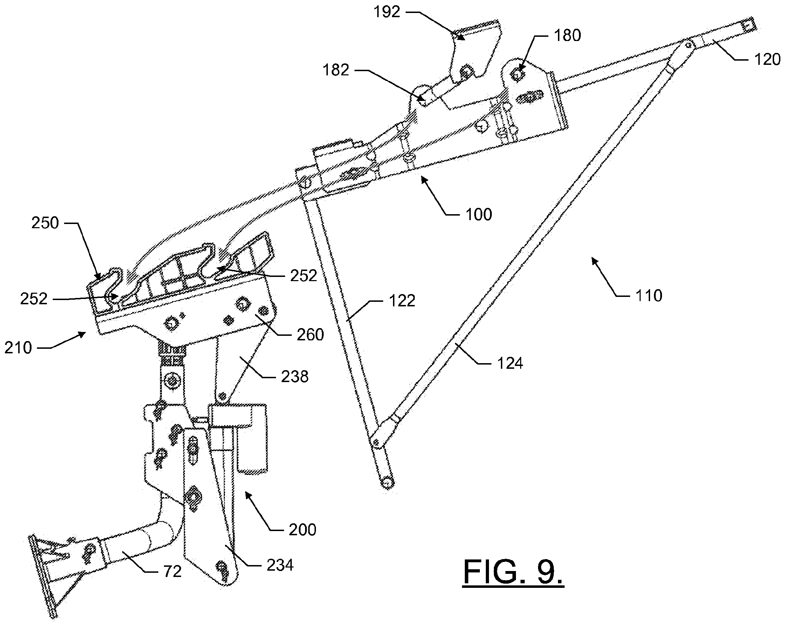

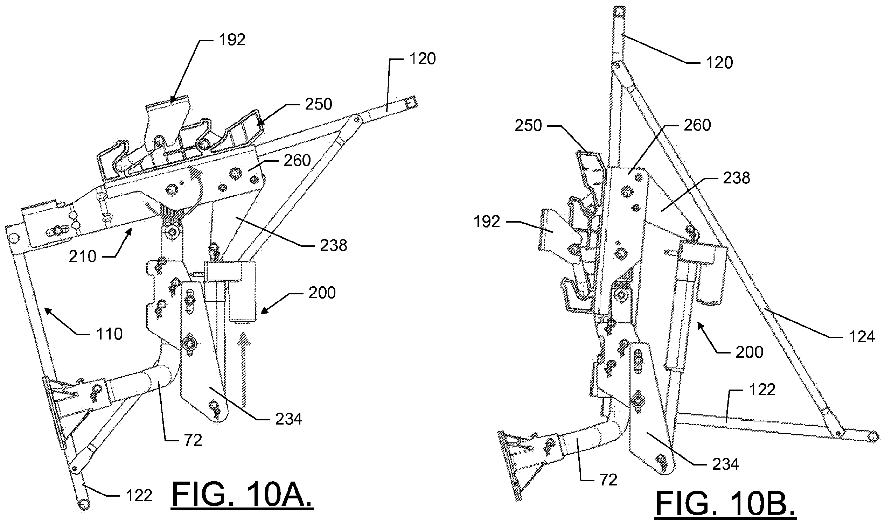

FIG. 2 illustrates an exploded perspective view of the carriage assembly 100 relative to the bagging attachment 12 of the riding lawn care vehicle 10 of FIG. 1 according to an example embodiment. The bag top 116, which may form a cover for the bagging attachment 12 is removed in FIG. 2 to expose some of the parts within the bagging attachment 12. As can be seen from FIG. 2, the carriage assembly 100 may be attached to portions of the bag frame 110. In this regard, the bag frame 110 may include a top frame member 120, a front frame member 122 and support members 124 (shown in FIGS. 9 and 10 extending diagonally between a bottom portion of the front frame member 122 and a rear portion of the top frame member 120). In an example embodiment, the top frame member 120 and the front frame member 122 may each be substantially U shaped bars, tubes or other support structures made of metal or other rigid material. The support members 124 may be substantially linear bars, tubes, rods or other support structures that are also made of metal or another rigid material and may be disposed such that opposite longitudinal ends of the support members 124 are affixed to a portion of a respective one of the top frame member 120 and the front frame member 122. In an example embodiment, opposite longitudinal ends of the support members 124 may be bolted, welded or otherwise affixed proximate to corresponding bent portions (used to form the U shape) of respective sides of the top frame member 120 and the front frame member 122.

Although FIG. 2 illustrates the top frame member 120 and the front frame member 122 as each being respective single pieces bent or otherwise formed to include three distinct legs, it should be appreciated that either or both of the top frame member 120 and the front frame member 122 could alternatively be formed by affixing component members (e.g., three separate leg pieces) together. Moreover, in some example embodiments, one or more of the top frame member 120 and the front frame member 122 may have a more rounded or oval shape between the respective ends of each of the top frame member 120 and the front frame member 122. Furthermore, it should be appreciated that, in some embodiments, the top frame member 120 may be incorporated into the bag top 116 and thus may not be a separate piece as shown in FIG. 2.

In an example embodiment, the top frame member 120 may be positioned to lie in a plane that lies substantially perpendicular to a plane in which the front frame member 122 lies when end portions of the top frame member 120 and the front frame member 122 are joined together. A first bracket 130 may engage respective first ends of both the top frame member 120 and the front frame member 122 to connect the top frame member 120 and the front frame member 122. A second bracket 132 may engage respective second ends of both the top frame member 120 and the front frame member 122 to connect the top frame member 120 and the front frame member 122.

In the example embodiment shown in FIG. 2, the first and second brackets 130 and 132 may be held in a fixed connection with the respective first and second ends of the front frame member 122. In this regard, for example, the first and second brackets 130 and 132 may be welded, bolted, locked or pinned to the respective first and second ends of the front frame member 122. Meanwhile, the first and second brackets 130 and 132 may also be held in a fixed connection with the respective first and second ends of the top frame member 120. Thus, the first and second brackets 130 may form a rigid attachment means between the respective first ends of the top frame member 120 and front frame member 122 and between the respective second ends of the top frame member 120 and front frame member 122. Each of the first and second brackets 130 and 132 may include an adjustment member such as a bolt, rod, detent and/or the like that provides a fixed attachment point to facilitate slidable engagement of the carriage assembly 100 to the first and second brackets 130 and 132 to permit adjustments to be made with respect to a position of the carriage assembly 100 relative to the bag frame 110.

The top member 120 may also include one or more rear attachment brackets to which another portion of the carriage assembly 100 may slidably engage. Of note, although the first and second brackets 130 and 132 and the rear brackets are provided with slots to allow slidable engagement with the carriage assembly 100, it should be appreciated that once the carriage assembly 100 is slid to a desired position relative to the top frame member 120, the first and second brackets 130 and 132 and the rear brackets may be affixed to the carriage assembly 100 to prevent any further sliding.

According to an example embodiment, the front frame member 122 may be disposed at a front or forward portion of the bagging attachment 12. Meanwhile, bent portions of the top frame member 120 may be disposed at a back or after portion of the bagging attachment 12. A bag may be defined by walls (e.g., three bag sidewalls 112, a bag bottom 114, and bag top 116, as shown in FIG. 1) that may be made of rigid materials, flexible materials, or combinations of rigid and flexible materials over various portions of the bag. In an example embodiment, the bag bottom 114 and bag top 116 may be made of rigid materials (e.g., plastic and/or a light metal) while the bag sidewalls 112 are made of a flexible material. The bag may be assembled or otherwise positioned around the bag frame 110 such that the bag top 116 rests at least in part on the top frame member 120. The bag bottom 114 may be supported by the bag top 116 via connection with the bag sidewalls 112. As such, the bag sidewalls 112 may extend downward (along the support members 124) from each edge portion of the bag top 116 other than at the forward portion of the bagging attachment 12 to connect to corresponding edges of the bag bottom 114 thereby defining an opening at the forward portion of the bagging attachment 12 to form or attach to the mating surface. By adjusting a position of the carriage assembly 100 in fore and aft directions, the pivot point of the bagging attachment 12 may be correspondingly adjusted.

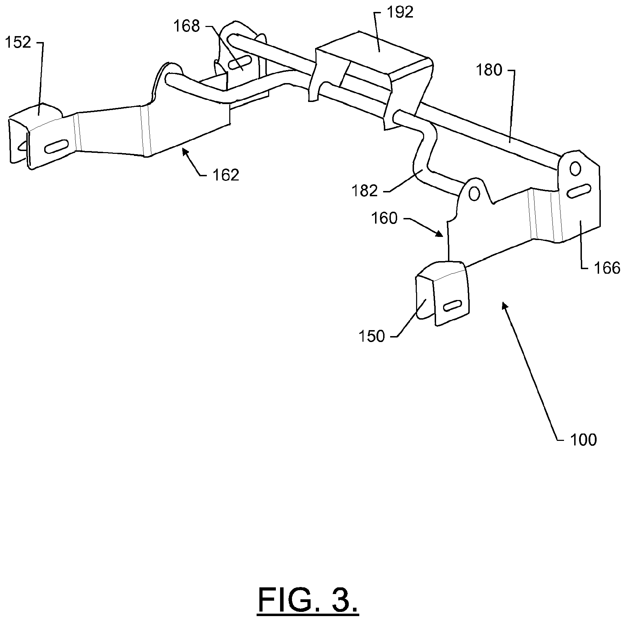

FIG. 3 illustrates a perspective view of the carriage assembly 100 isolated from other components. A further description of the carriage assembly 100 will now be provided in reference to FIGS. 2 and 3. The carriage assembly 100 includes a first adjustable bracket assembly 150 and a second adjustable bracket assembly 152. The first adjustable bracket assembly 150 is slidably connected to the first bracket 130. The second adjustable bracket assembly 152 is slidably connected to the second bracket 132. The first and second adjustable bracket assemblies 150 and 152 are each operably coupled to corresponding respective ones of first and second legs 160 and 162. The first and second legs 160 and 162 may be spaced apart from each other but otherwise extend substantially parallel to each other over portions thereof that mirror one another. In some cases, the first and second legs 160 and 162 may have respective proximal ends that are proximate to the front of the bagging attachment 12 (and the front frame member 122) and distal ends that are proximate to the top frame member 120 at portions of the top frame member 120 that are proximate to the rear brackets 140 and 142. As such, the distal ends of the first and second legs 160 and 162 may terminate at respective third and fourth adjustable bracket assemblies 166 and 168, which may be slidably connected to the rear brackets 140 and 142.

In an example embodiment, the first and second externally adjustable bracket assemblies 150 and 152 may each be embodied as sleeve brackets having respective guide slots therein. The sleeve brackets and the guide slots may be disposed at opposite longitudinal ends of a first connecting member 180 and a second connecting member 182 forming a portion of the carriage assembly 100. The first and second connecting members 180 and 182 may extend between a middle portion of the first and second legs 160 and 162 and extend in a direction substantially perpendicular to a direction of extension of the middle portion of the first and second legs 160 and 162. The first and second connecting members 180 and 182 may be tubes, bars, rods or other elongate members that may be straight, include bent portions, or have a combination of straight and bent portions. However, in some embodiments, a middle portion of each of the first and second connecting members 180 and 182 may be substantially straight to facilitate engagement with the bagging attachment support structure 70. In some embodiments, the first and second connecting members 180 and 182 may include or be operably coupled with a centrally positioned handle or handle mount 192 that may connect to portions of the bag top 116 or be accessible through the bag top 116 to facilitate engagement or disengagement of the first and second connecting members 180 and 182 with the bagging attachment support structure 70 when installing or removing the bagging attachment 12.

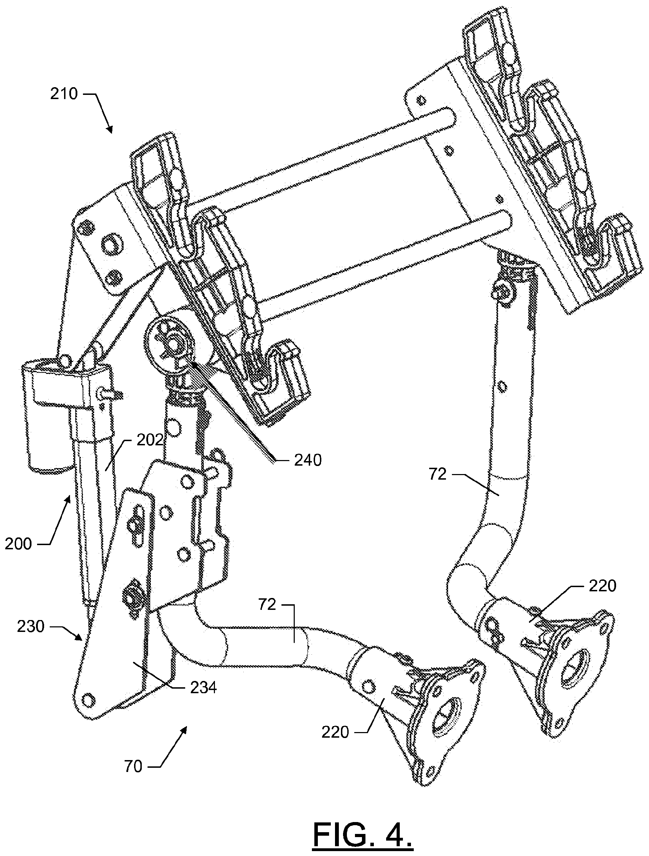

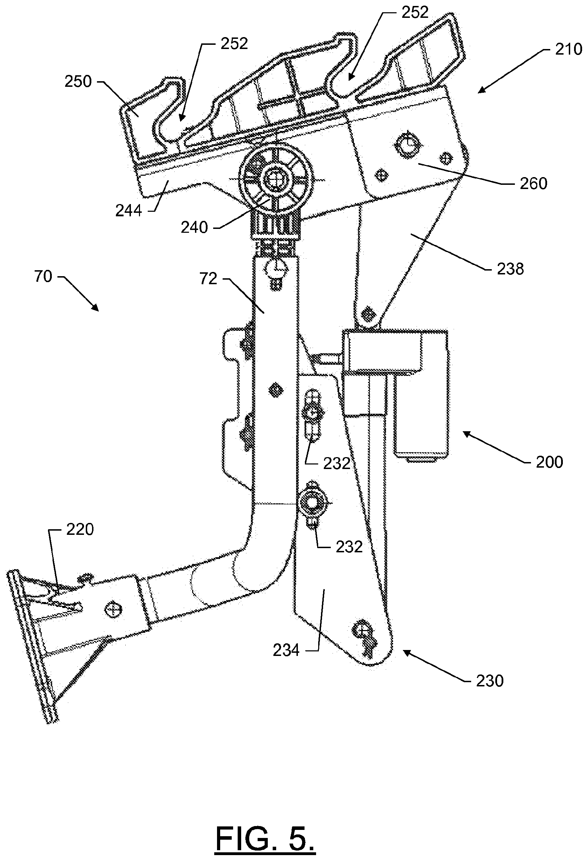

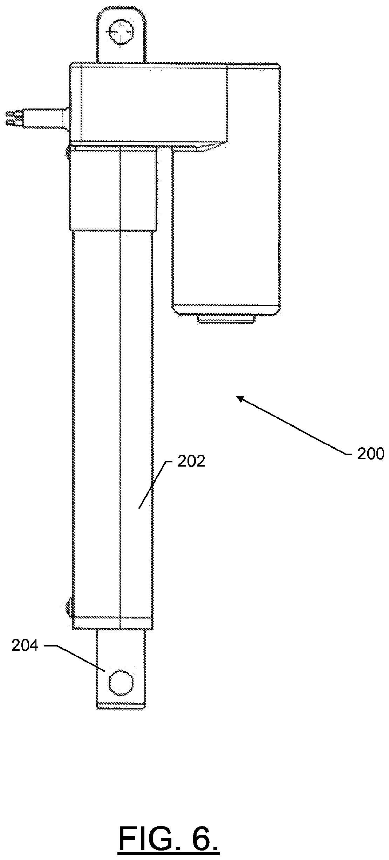

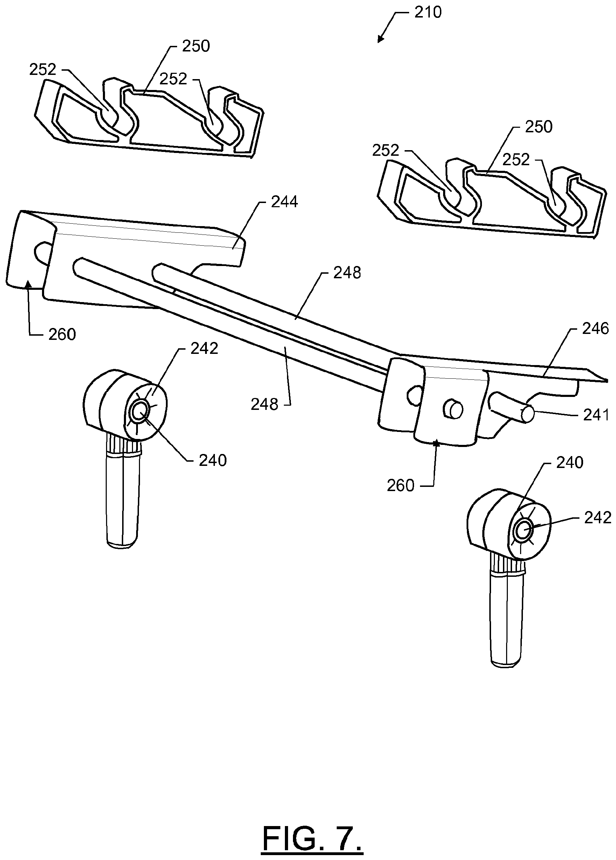

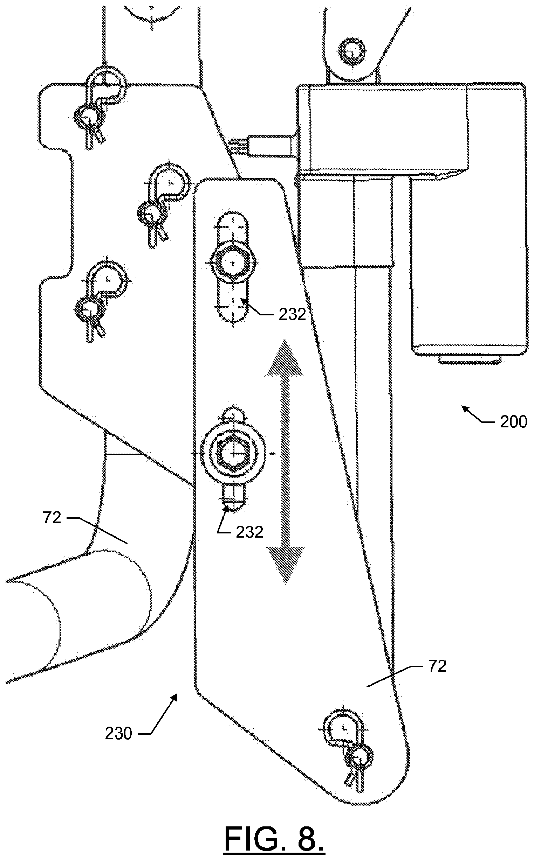

FIG. 4 illustrates a perspective view of portions of the bagging attachment support structure 70 according to an example embodiment. FIG. 5 illustrates a side view of the bagging attachment support structure according to an example embodiment. FIG. 6 is a side view of a powered drive 200 useable in connection with the bagging attachment support structure 70 according to an example embodiment. FIG. 7 illustrates an exploded perspective view of a pivot assembly 210 useable in connection with the bagging attachment support structure 70 according to an example embodiment. FIG. 8 is a side view of an adjustment plate for adjustable mounting of the powered drive 200 relative to the bagging attachment support structure 70 according to an example embodiment. FIG. 9 illustrates a side view of the bagging attachment support structure 70 and the bag frame 110 to illustrate how the bag frame 110 is supported by the bagging attachment support structure 70 according to an example embodiment. FIG. 10, which includes FIGS. 10A and 10B, illustrates the bag frame 110 being rotated between a first position and a second position using the powered drive 200 according to an example embodiment.

An example embodiment will now be described referring primarily to FIGS. 4-10. In this regard, as shown in FIGS. 4 and 5, the bagging attachment support structure 70 may include the support rods 72. The support rods 72 may be coupled to the frame or body of the riding lawn care vehicle 10 via support rod mounts 220 that may be operably coupled to the back plate 60 of the riding lawn care vehicle 10. The support rods 72 may, in some cases, be supported from locations relatively close to each other and bend outward and vertically to provide a distance between distal ends of the support rods 72 that is less than the length of the first and second connecting members 180 and 182 of the carriage assembly 100.

At least one of the support rods 72 may be coupled to the powered drive 200 via an adjustable support bracket 230. The adjustable support bracket 230, which is shown in greater detail in FIG. 8, may include vertical adjustment slots 232 disposed to extend substantially vertically within a mounting plate 234. The mounting plate 234 may be operably coupled to the support rods 72 (directly or indirectly) via pins, bolts, rivets, screws, weld joints, or other fixing mechanisms. The powered drive 200 may be slidably coupled to the mounting plate 234 via bolts whose position may be vertically adjusted within the vertical adjustment slots 232. The bolts may be loosened to permit vertical adjustment and then tightened in order to fix the powered drive 200 at a desired position.

In an example embodiment, the powered drive 200 may include a hydraulic, electric or other powered actuator. The powered drive 200 may be oriented substantially vertically so that the force exerted by the powered drive 200 is initially in a vertical direction. The powered drive 200 may include a main body 202 and an extendible member 204 configured to extend linearly out of the main body 202 responsive to powered operation of the powered drive 200. For example, the operator may actuate a button, lever, or other user interface control in order to cause a signal to be applied to the hydraulic or electrical actuator that initiates extension of the extendible member 204 out of the main body 202 or retraction of the extendible member 204 into the main body 202. In an example embodiment, respective ends of the powered drive may be pivotably coupled to the mounting plate 234 and a portion of the pivot assembly 210 that is rearward of the pivot point of the carriage assembly 100 responsive to operation of the powered drive 200 so that the extendible member 204 extends to push off the mounting plate 234 exert a force onto the pivot assembly 210 to cause movement of the pivot assembly 210. In some embodiments, the main body 202 or the extendible member 204 could be connected to a portion of the pivot assembly 210. However, as an alternative, some embodiments may employ an intermediate lift plate 238 disposed between the pivot assembly 210 and either of the extendible member 204 or the main body 202. In such an example, the connection between the pivot assembly 210 and the intermediate lift plate 238 may be flexible to allow some movement of the powered drive 200 out of the completely vertical direction (e.g., as shown in FIG. 10) during operation.

The pivot assembly 210, which is show in greater detail in FIG. 7, may include pivot sockets 240 that may each be received within or at a respective end of one of the support rods 72. The pivot sockets 240 may define a pivot point for the pivot assembly 210. Although the pivot sockets 240 shown in FIG. 7 are essentially fixed receivers for holding an axle rod 241 that is rotatably received in the corresponding fixed receiving holes 242, it should be appreciated that the pivot point could alternatively be provided via other structural arrangements. For example the pivot point could incorporate a hinge assembly, bearings, shafts or any of a number of other structures capable of enabling rotation about a pivot point. As shown in FIG. 7, the pivot assembly 210 may further include a first support bracket 244 and a second support bracket 246 that are operably coupled to one another via one or more cross tubes 248. In the example of FIG. 7, the cross tubes 248 extend in a direction substantially perpendicular to the direction of extension of the first and second support brackets 244 and 246. Moreover, a portion of the cross tubes 248 proximate to opposing ends of one of the cross tubes 248 may supported by the first and second support brackets 244 and 246 while the axle rod 241 forms the end of the corresponding cross tube 248 to extend into its corresponding receiving hole 242. The axle rod 241 may rotate within the receiving hole 242 with a relatively low amount of friction by employing low friction material. As such, for example, the material forming and/or coating the receiving hole 242 and/or the axle rode 241 may be Nylon, Acetal, High-density polyethylene (HDPE), a low friction plastic, or other engineering material having a relatively low friction. Accordingly, for example, the entirety of one or more of the cross tubes 248 may be made of the low friction material or the axle rod 241 portion of the cross tube 248 may be coated with the low friction material. Alternatively or additionally, an entirety of the pivot sockets 240 may be made of the low friction material or an inner periphery of the receiving holes 242 may be coated with the low friction material. As such, example embodiments may provide a relatively smooth operating pivot point that provides consistent operation over a very long lifetime. Therefore, for example, rather than experiencing wear over time that either wears away an initially present coating material or wears metal parts down over time, the structures of an example embodiment may provide consistent operation over the life of the riding lawn care vehicle 10.

In an example embodiment, a carriage assembly receiver 250 may be operably coupled to the first and second support brackets 244 and 246 to receive the first and second connecting members 180 and 182 of the carriage assembly 100. FIG. 9 illustrates how the first and second connecting members 180 and 182 of the carriage assembly 100 may fit into respective receiving slots 252 of the carriage assembly receiver 250. Although not required, in some embodiments, the carriage assembly receiver 250 (or at least the receiving slots 252) may be made of or coated using the low friction material.

As shown in FIGS. 5, 7, 9 and 10, one of the support brackets (e.g., the first support bracket 244 or the second support bracket 246) may include a lift bracket 260 that is operably coupled to the powered drive 200. In some embodiments, the intermediate lift plate 238 may be in pivotable or flexible engagement with the lift bracket 260 at one end of the intermediate lift plate 238 and with the powered drive 200 at the other end of the intermediate lift plate 238. Accordingly, as the powered drive 200 operates to extend, a force may initially be exerted in a substantially vertical direction to a rear portion of the pivot assembly. In this regard, for example, the bag frame 110 may start in a first position (where the bagging attachment 12 may be positioned to receive discharged material from the rear discharge of the riding lawn care vehicle 10) shown in FIG. 10A. As the powered drive 200 operates, the extendible member 204 may begin to linearly extend out of the main body 202 and apply an upward force to the lift bracket 260 via the intermediate lift plate 238. The theoretical angle of the moment arm created between the pivot and the upper mounting point of the powered drive 200 may be about 55 degrees. As such, when an upward force is provided to the lift bracket 260, the load of the bagging attachment 12 can be relatively easily overcome in order to lift a rear portion of the pivot assembly 210 so that the bag frame 110 rotates about the pivot point as the pivot assembly 210 pivots. As the upward force continues to be applied while the extendible member 204 extends, the intermediate lift plate 238 rotates to keep applying pressure to the rear of the pivot assembly 210 to cause the bag frame 110 to continue to rotate from the first position to a second position shown in FIG. 10B. As such, the pivot assembly 210 pivots about a discrete point (e.g., the pivot point) while carrying or otherwise supporting the bag frame 110 via the carriage assembly 100 such that the bag frame 110 moves like a hinge between the first and second positions.

In some embodiments, the provision of the substantially vertically oriented lift force to a rear portion of the pivot assembly 210 enables less power to be required from the powered drive 200 in order to rotate the bagging attachment 12 between the first position (e.g., a collection position) and the second position (e.g., a dump position). The use of a low friction material at the pivot point may further reduce power requirements for pivoting, and may also improve consistency of operation over time as well as improving the customer's perception of operation and quality of the riding lawn care vehicle 10. The pivot point is located within the bagging attachment 12 when the bagging attachment 12 is shifted between the first and second positions. However, the bagging attachment 12 is still enabled to rotate or pivot to and from the dumping position from/to a secure fit with the back plate 60 of the riding lawn care vehicle. As such, the pivot point may be positioned at a point such that, when the bagging attachment 12 is installed, the normal resting position of the bagging attachment 12 may be such that the bagging attachment 12 tends to pivot into snug engagement with the back plate 60. However, when the vertical lifting force is applied to the rear of the pivot assembly 210, a rear of the bagging attachment 12 may be elevated to rotate the bagging attachment 12 away from engagement with the back plate 60 to dump the contents of the bagging attachment 12.

As shown in FIG. 10A, the powered drive 200 is rotatably connected to the intermediate lift plate 238, which is in turn also rotatably connected to the pivot assembly 210 (e.g., via the lift bracket 260). The intermediate lift plate 238 may be configured to define an angle between a plane in which the pivot assembly 210 lies and a line between the pivot socket 240 and a top of the powered drive 200 of about 55 degrees +/about 15 degrees. The intermediate lift plate 238 may be configured to provide an initially upward force to lift a rear portion of the pivot assembly 210. However, due to the rotatably or flexible connection to both the pivot assembly 210 and the powered drive 200, the intermediate lift plate 238 can swing through a plurality of angles and continue to translate force applied to the intermediate lift plate 238 to the pivot assembly 210 over a plurality increasing angles relative to a vertically oriented plane as shown while transitioning from the first position (FIG. 10A) to the second position (FIG. 10B). In this example, the flexible connection provided by the intermediate lift plate 238 also allows for the powered drive 200 to shift its orientation slightly out of alignment with the vertically oriented plane as shown in FIG. 10B. Furthermore, as is shown in FIG. 10, the front frame member 122 is configured to mate with the back plate 60 responsive to the bag frame 110 being in the first position (FIG. 10A) and the front frame member 122 lies in a plane within about 15 degrees of horizontal when rotated to the second position (FIG. 10B). Accordingly, as can be seen in FIG. 10, the pivot point is disposed forward of a midway point of the legs of the top frame member and the powered drive 200 is operably coupled to the pivot assembly 210 (e.g., via the intermediate lift plate 238) at a point that is rearward of the midway point.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims.

## Claims

1. A system comprising a bagging attachment support structure (70) and a bagging attachment (12) configured to attach to a rear of a riding lawn care vehicle (10) to receive debris discharged via a rear discharge (94) of the riding lawn care vehicle (10), the bagging attachment support structure (70) comprising:
at least two support rods (72) disposed to extend from a back plate (60) of the riding lawn care vehicle (10), each of the support rods (72) terminating at a distal end thereof at a corresponding pivot socket (240) defining a pivot point of a pivot assembly (210) configured to engage a carriage assembly (100) of the bagging attachment (12), the carriage assembly (100) being operably coupled to a bag frame (110) of the bagging attachment (12); and
a powered drive (200) operably coupled to one of the support rods (72) and to the pivot assembly (210) at a portion of the pivot assembly (210) that is rearward of the bagging attachment support structure (70),
wherein the pivot point defines a point about which the bag frame (110) is pivotable via operation of the powered drive (200) to rotate the bag frame (110) between a first position in which material is collectable in the bagging attachment (12) via the rear discharge (94), and a second position in which the bag frame (110) is rotated to a dump position for emptying contents of the bagging attachment (12), and
wherein the powered drive (200) is configured to extend in a substantially vertical direction to deliver a force to the portion of the pivot assembly (210) that is rearward of the bagging attachment support structure (70) to cause the bag frame (110) to rotate between the first position and the second position,
**characterized in that**
the carriage assembly (100) comprises a first sleeve bracket (150) and a second sleeve bracket (152) that each extend over respective legs (160,162) of the bag frame (110) to slidably connect the carriage assembly (100) to the bag frame (110).

2. The system comprising the bagging attachment support structure (70) and the bagging attachment (12) of claim 1, wherein the powered drive (200) comprises an electrical or hydraulic actuator.

3. The system comprising the bagging attachment support structure (70) and the bagging attachment (12) of claim 1 or 2, wherein the powered drive (200) is operably coupled to the one of the support rods (72) via an adjustable support bracket (244, 246) configured to enable a vertical position of the powered drive (200) to be adjusted.

4. The system comprising the bagging attachment support structure (70) and the bagging attachment (12) of claim 1, wherein the powered drive (200) is rotatably connected to an intermediate lift plate (238) that is rotatably connected to the pivot assembly (210).

5. The system comprising the bagging attachment support structure (70) and the bagging attachment (12) of claim 4, wherein the intermediate lift plate (238) is configured to define an angle between a plane in which the pivot assembly (210) lies and a line between the pivot socket (240) and a top of the powered drive (200) of about 55 degrees.

6. The system comprising the bagging attachment support structure (70) and the bagging attachment (12) of claim 4, wherein the intermediate lift plate (238) is configured to provide an initially upward force to lift a rear portion of the pivot assembly (210) and continue to translate force applied to the intermediate lift plate (238) to the pivot assembly (210) over a plurality increasing angles relative to a vertically oriented plane.

7. The system comprising the bagging attachment support structure (70) and the bagging attachment (12) of any one of claims 1 to 6, wherein at least a portion (242) of the pivot socket (240) that receives an axle of the pivot assembly (210) at the pivot point is coated with a low friction material.

8. The system comprising the bagging attachment support structure (70) and the bagging attachment (12) of claim 7, wherein the low friction material comprises Nylon, Acetal or High-density polyethylene.

9. The system comprising the bagging attachment support structure (70) and the bagging attachment (12) of any of claims 1 to 8, wherein the bag frame (110) comprises a top frame member (120) and a front frame member (122) disposed in respective planes that lie substantially perpendicular to each other, the front frame member (122) being configured to mate with the back plate (60) responsive to the bag frame (110) being in the first position and lie in a plane within about 15 degrees of horizontal when rotated to the second position.

10. The system comprising the bagging attachment support structure (70) and the bagging attachment (12) of claim 9, wherein the pivot point is disposed forward of a midway point of the legs (160, 162) of the top frame member (120) (122) and wherein the powered drive (200) is operably coupled to the pivot assembly (210) rearward of the midway point.

11. The system comprising the bagging attachment support structure (70) and the bagging attachment (12) of claim 1, wherein the powered drive (200) is operably coupled to a rear facing portion of only one of the support rods (72).

12. The system comprising the bagging attachment support structure (70) and the bagging attachment (12) of any preceding claim, wherein the pivot assembly (210) further comprises:
first and second support brackets (244, 246) each of which is operably coupled to a respective one of the at least two pivot sockets (240), the first and second support brackets (244, 246) being operably coupled to one another by at least one cross tube (248), the first and second support brackets (244, 246) supporting opposing ends of an axle configured to operably couple to the at least two pivot sockets (240) at the pivot point; and
a carriage assembly receiver (250) operably coupled to the first and second support brackets (244, 246) to engage the carriage assembly (100),
wherein a moment arm for pivoting the pivot assembly (210) about the pivot point between the first position and the second position is located rearward of the pivot point and has an initially vertical orientation.

13. A riding lawn care vehicle (10) comprising the system comprising the bagging attachment support structure (70) and the bagging attachment (12) of any of claims 1-12.

## Patentansprüche

1. Ein System, das eine Packbefestigungshaltestruktur (70) und eine Packbefestigung (12) umfasst, das so konfiguriert ist, dass es an einem Heck eines Aufsitzrasenmähers (10) befestigt werden kann, um Schmutz aufzunehmen, der über einen Heckauswurf (94) des Aufsitzrasenmähers (10) ausgeworfen wird, wobei die Packbefestigungshaltestruktur (70) umfasst:
mindestens zwei Stützstangen (72), die so angeordnet sind, dass sie sich von einer Rückplatte (60) des fahrenden Aufsitzrasenmähers (10) erstrecken, wobei jede der Stützstangen (72) an einem distalen Ende davon an einem entsprechenden Schwenkpfosten (240) endet, der einen Schwenkpunkt einer Schwenkbaugruppe (210) definiert, die so konfiguriert ist, dass sie mit einer Trägeranordnung (100) der Packbefestigung (12) in Eingriff kommt, wobei die Trägeranordnung (100) betriebsfähig mit einem Beutelrahmen (110) der Packbefestigung (12) gekoppelt ist; und
einen angetriebenen Antrieb (200), der betriebsmäßig mit einer der Stützstangen (72) und mit der Schwenkbaugruppe (210) an einem Abschnitt der Schwenkbaugruppe (210) gekoppelt ist, der sich hinter der Packbefestigungshaltestruktur (70) befindet,
wobei der Schwenkpunkt einen Punkt definiert, um den der Beutelrahmen (110) über die Betätigung des angetriebenen Antriebs (200) schwenkbar ist, um den Beutelrahmen (110) zwischen einer ersten Position, in der Material in der Packbefestigung (12) über den hinteren Auslass (94) gesammelt werden kann, und einer zweiten Position, in der der Beutelrahmen (110) in eine Entleerungsposition zum Entleeren des Inhalts der Packbefestigung (12) zu drehen, und
wobei der angetriebene Antrieb (200) so konfiguriert ist, dass er sich in einer im Wesentlichen vertikalen Richtung erstreckt, um eine Kraft auf den Abschnitt der Schwenkbaugruppe (210) zu übertragen, der sich hinter der Packbefestigungshaltestruktur (70) befindet, um zu bewirken, dass sich der Beutelrahmen (110) zwischen der ersten Position und der zweiten Position dreht, **dadurch gekennzeichnet, dass**
die Trägeranordnung (100) eine erste Hülsenklammer (150) und eine zweite Hülsenklammer (152) aufweist, die sich jeweils über entsprechende Schenkel (160, 162) des Beutelrahmens (110) erstrecken, um die Trägeranordnung (100) verschiebbar mit dem Beutelrahmen (110) zu verbinden.

2. System, das eine Packbefestigungshaltestruktur (70) und eine Packbefestigung (12) nach Anspruch 1 umfasst, wobei der angetriebene Antrieb (200) ein elektrisches oder hydraulisches Stellglied umfasst.

3. System, das eine Packbefestigungshaltestruktur (70) und eine Packbefestigung (12) nach Anspruch 1 oder 2 umfasst, wobei der angetriebene Antrieb (200) über einen einstellbaren Tragbügel (244, 246), der so konfiguriert ist, dass eine vertikale Position des angetriebenen Antriebs (200) eingestellt werden kann, betriebsfähig mit einer der Stützstangen (72) gekoppelt ist.

4. System, das eine Packbefestigungshaltestruktur (70) und eine Packbefestigung (12) nach Anspruch 1 umfasst, wobei der angetriebene Antrieb (200) drehbar mit einer Zwischen-Hebeplatte (238) verbunden ist, die drehbar mit der Schwenkbaugruppe (210) verbunden ist.

5. System, das eine Packbefestigungshaltestruktur (70) und eine Packbefestigung (12) nach Anspruch 4 umfasst, wobei die Zwischen-Hebeplatte (238) so konfiguriert ist, dass sie einen Winkel von etwa 55 Grad zwischen einer Ebene, in der die Schwenkbaugruppe (210) liegt, und einer Linie zwischen dem Schwenkpfosten (240) und einer Oberseite des angetriebenen Antriebs (200) definiert.

6. System, das eine Packbefestigungshaltestruktur (70) und eine Packbefestigung (12) nach Anspruch 4 umfasst, wobei die Zwischen-Hebeplatte (238) so konfiguriert ist, dass sie eine anfänglich nach oben gerichtete Kraft bereitstellt, um einen hinteren Abschnitt der Schwenkbaugruppe (210) anzuheben und die auf die Zwischen-Hebeplatte (238) ausgeübte Kraft weiterhin über eine Vielzahl zunehmender Winkel relativ zu einer vertikal ausgerichteten Ebene auf die Schwenkbaugruppe (210) zu übertragen.

7. System, das eine Packbefestigungshaltestruktur (70) und eine Packbefestigung (12) nach einem der Ansprüche 1 bis 6 umfasst, wobei mindestens ein Teil (242) des Schwenkpfostens (240), der eine Achse der Schwenkbaugruppe (210) am Schwenkpunkt aufnimmt, mit einem reibungsarmen Material beschichtet ist.

8. System, das eine Packbefestigungshaltestruktur (70) und eine Packbefestigung (12) nach Anspruch 7 umfasst, wobei das reibungsarme Material Nylon, Acetal oder Polyethylen hoher Dichte umfasst.

9. System, das eine Packbefestigungshaltestruktur (70) und eine Packbefestigung (12) nach einem der Ansprüche 1 bis 8 umfasst, wobei der Beutelrahmen (110) ein oberes Rahmenelement (120) und ein vorderes Rahmenelement (122) umfasst, die in jeweiligen Ebenen angeordnet sind, die im Wesentlichen senkrecht zueinander liegen, wobei das vordere Rahmenelement (122) so konfiguriert ist, dass es mit der Rückplatte (60) zusammenpasst, wenn sich der Beutelrahmen (110) in der ersten Position befindet, und in einer Ebene innerhalb von etwa 15 Grad von der Horizontalen liegt, wenn er in die zweite Position gedreht wird.

10. System, das eine Packbefestigungshaltestruktur (70) und eine Packbefestigung (12) nach Anspruch 9 umfasst, wobei der Schwenkpunkt vor einem Mittelpunkt der Schenkel (160, 162) des oberen Rahmenelements (120) angeordnet ist und wobei der angetriebene Antrieb (200) betriebsfähig mit der Schwenkbaugruppe (210) hinter dem Mittelpunkt gekoppelt ist.

11. System, das eine Packbefestigungshaltestruktur (70) und eine Packbefestigung (12) nach Anspruch 1 umfasst, wobei der angetriebene Antrieb (200) betriebsfähig mit einem nach hinten gerichteten Abschnitt von nur einer der Stützstangen (72) gekoppelt ist.

12. System, das eine Packbefestigungshaltestruktur (70) und eine Packbefestigung (12) nach einem beliebigen der vorhergehenden Ansprüche umfasst, wobei die Schwenkbaugruppe (210) ferner umfasst:
einen ersten und einen zweiten Tragbügel (244, 246), von denen jeder funktionsfähig mit jeweils einem der mindestens zwei Schwenkpfosten (240) gekoppelt ist, wobei der erste und der zweite Tragbügel (244, 246) durch mindestens ein Querrohr (248) funktionsfähig miteinander gekoppelt sind, wobei der erste und der zweite Tragbügel (244, 246) gegenüberliegende Enden einer Achse tragen, die so konfiguriert ist, dass sie am Schwenkpunkt funktionsfähig mit den mindestens zwei Schwenkpfosten (240) gekoppelt ist; und eine Hülsenklammer (150) für die Trägeranordnung, die betriebsmäßig mit dem ersten und zweiten Tragbügel (244, 246) gekoppelt ist, um in die Trägeranordnung (100) einzugreifen,
wobei ein Momentarm zum Schwenken der Schwenkbaugruppe (210) um den Schwenkpunkt zwischen der ersten Position und der zweiten Position hinter dem Schwenkpunkt angeordnet ist und eine anfänglich vertikale Ausrichtung hat.

13. Ein Aufsitzrasenmäher (10), der das System, das eine Packbefestigungshaltestruktur (70) und eine Packbefestigung (12) nach einem der Ansprüche 1-12 umfasst, umfasst.

## Revendications

1. Système comprenant une structure de soutien d'accessoire d'ensachage (70) et un accessoire d'ensachage (12) conçu de façon à se fixer à l'arrière d'un véhicule d'entretien de pelouse autoporté (10) pour recevoir des débris déchargés par le biais d'une décharge arrière (94) du véhicule d'entretien de pelouse autoporté (10), la structure de soutien d'accessoire d'ensachage (70) comprenant :
au moins deux tiges de soutien (72) disposées pour s'étendre à partir d'une plaque arrière (60) du véhicule d'entretien de pelouse autoporté (10), chacune des tiges de soutien (72) se terminant à une extrémité distale de celui-ci au niveau d'une douille pivot correspondante (240) définissant un point de pivot d'un ensemble pivot (210) conçu pour mettre en prise un ensemble chariot (100) de l'accessoire d'ensachage (12), l'ensemble chariot (100) étant accouplé de manière fonctionnelle à un cadre de sac (110) de l'accessoire d'ensachage (12) ; et
un entraînement motorisé (200) accouplé de manière fonctionnelle à l'une des tiges de soutien (72) et à l'ensemble pivot (210) au niveau d'une partie de l'ensemble pivot (210) qui est à l'arrière de la structure de soutien d'accessoire d'ensachage (70),
le point de pivot définissant un point autour duquel le cadre de sac (110) peut pivoter par le biais du fonctionnement de l'entraînement motorisé (200) pour faire tourner le cadre de sac (110) entre une première position dans laquelle du matériau peut être collecté dans l'accessoire d'ensachage (12) par le biais de la décharge arrière (94), et une seconde position dans laquelle le cadre de sac (110) est tourné vers une position de vidage pour vider le contenu de l'accessoire d'ensachage (12), et
l'entraînement motorisé (200) étant conçu pour s'étendre dans une direction sensiblement verticale afin d'appliquer une force à la partie de l'ensemble pivot (210) qui est à l'arrière de la structure de soutien d'accessoire d'ensachage (70) pour amener le cadre de sac (110) à tourner entre la première position et la seconde position,
**caractérisé en ce que**
l'ensemble chariot (100) comprend un premier support de manchon (150) et un second support de manchon (152) qui s'étendent chacun sur des jambes respectives (160, 162) du cadre de sac (110) pour relier de manière coulissante l'ensemble chariot (100) au cadre de sac (110).

2. Système comprenant la structure de soutien d'accessoire d'ensachage (70) et l'accessoire d'ensachage (12) selon la revendication 1, dans lequel l'entraînement motorisé (200) comprend un actionneur électrique ou hydraulique.

3. Système comprenant la structure de soutien d'accessoire d'ensachage (70) et l'accessoire d'ensachage (12) selon la revendication 1 ou 2, dans lequel l'entraînement motorisé (200) est accouplé de manière fonctionnelle à l'une des tiges de soutien (72) par le biais d'un support de soutien réglable (244, 246) conçu pour permettre le réglage d'une position verticale de l'entraînement motorisé (200).

4. Système comprenant la structure de soutien d'accessoire d'ensachage (70) et l'accessoire d'ensachage (12) selon la revendication 1, dans lequel l'entraînement motorisé (200) est relié de manière rotative à une plaque de levage intermédiaire (238) qui est reliée de manière rotative à l'ensemble pivot (210).

5. Système comprenant la structure de soutien d'accessoire d'ensachage (70) et l'accessoire d'ensachage (12) selon la revendication 4, dans lequel la plaque de levage intermédiaire (238) est conçue pour définir un angle d'environ 55 degrés entre un plan dans lequel se trouve l'ensemble pivot (210) et une ligne entre la douille pivot (240) et une partie supérieure de l'entraînement motorisé (200).

6. Système comprenant la structure de soutien d'accessoire d'ensachage (70) et l'accessoire d'ensachage (12) selon la revendication 4, dans lequel la plaque de levage intermédiaire (238) est conçue pour fournir une force initialement vers le haut pour soulever une partie arrière de l'ensemble pivot (210) et continuer à translater la force appliquée à la plaque de levage intermédiaire (238) vers l'ensemble pivot (210) sur une pluralité d'angles croissants par rapport à un plan orienté verticalement.

7. Système comprenant la structure de soutien d'accessoire d'ensachage (70) et l'accessoire d'ensachage (12) selon l'une quelconque des revendications 1 à 6, dans lequel au moins une partie (242) de la douille pivot (240) qui reçoit un essieu de l'ensemble pivot (210) au niveau du point de pivot est recouvert d'un matériau à faible friction.

8. Système comprenant la structure de soutien d'accessoire d'ensachage (70) et l'accessoire d'ensachage (12) selon la revendication 7, dans lequel le matériau à faible friction comprend du nylon, de l'acétal ou du polyéthylène haute densité.

9. Système comprenant la structure de soutien d'accessoire d'ensachage (70) et l'accessoire d'ensachage (12) selon l'une quelconque des revendications 1 à 8, dans lequel le cadre de sac (110) comprend un élément de cadre supérieur (120) et un élément de cadre avant (122) disposés dans des plans respectifs qui se trouvent sensiblement perpendiculaires les uns aux autres, l'élément de cadre avant (122) étant conçu pour s'assembler avec la plaque arrière (60) lorsque le cadre de sac (110) est dans la première position et se trouve dans un plan à environ 15 degrés de l'horizontale lorsqu'il est tourné vers la seconde position.

10. Système comprenant la structure de soutien d'accessoire d'ensachage (70) et l'accessoire d'ensachage (12) selon la revendication 9, dans lequel le point de pivot est disposé en avant d'un point médian des jambes (160, 162) de l'élément de cadre supérieur (120) et dans lequel l'entraînement motorisé (200) est accouplé de manière fonctionnelle à l'ensemble pivot (210) à l'arrière du point médian.

11. Système comprenant la structure de soutien d'accessoire d'ensachage (70) et l'accessoire d'ensachage (12) selon la revendication 1, dans lequel l'entraînement motorisé (200) est accouplé de manière fonctionnelle à une partie tournée vers l'arrière d'une seule des tiges de soutien. (72)

12. Système comprenant la structure de soutien d'accessoire d'ensachage (70) et l'accessoire d'ensachage (12) selon l'une quelconque des revendications précédentes, dans lequel l'ensemble pivot (210) comprend en outre :
des premier et second supports de soutien (244, 246) chacun étant accouplé de manière fonctionnelle à une douille respective des au moins deux douilles pivot (240), les premier et second supports de soutien (244, 246) étant accouplés de manière fonctionnelle l'un à l'autre par au moins au moins un tube transversal (248), les premier et second supports de soutien (244, 246) soutenant des extrémités opposées d'un essieu conçu pour s'accoupler de manière fonctionnelle aux au moins deux douilles pivot (240) au niveau du point de pivot ; et
un récepteur d'ensemble chariot (250) accouplé de manière fonctionnelle aux premier et second supports de soutien (244, 246) pour mettre en prise l'ensemble chariot (100), dans lequel un bras de levier destiné à faire pivoter l'ensemble pivot (210) autour du point de pivot entre la première position et la seconde position est situé à l'arrière du point de pivot et a une orientation initialement verticale.

13. Véhicule d'entretien de pelouse autoporté (10) comprenant le système comprenant la structure de soutien d'accessoire d'ensachage (70) et l'accessoire d'ensachage (12) selon l'une quelconque des revendications 1 à 12.
